# EUROPEAN PATENT APPLICATION

(11) **EP 4 585 300 A1**
(43) Date of publication of application: **16.07.2025**
(21) Application number: 25150671.3
(22) Date of filing: 08.01.2025
(51) Int. Cl.: B01F 23/232, B01F 23/237, B01F 23/70, B01F 25/312, C02F 1/78, E03C 1/046, C01B 13/11, C01B 21/20

(54) **GAS-LIQUID MIXING DEVICE**

(30) Priority: 10.01.2024 TW 113100998
(71) Applicant: Sanitar Co., Ltd, New Taipei City 241 (TW)
(72) Inventor: HSIAO, Chun-Hsiang, 241 New Taipei City (TW); HUANG, Tien-Yao, 241 New Taipei City (TW)
(74) Representative: Page White Farrer

(57) **Abstract**

A gas-liquid mixing device includes a sterilization module (4), a venturi tube (5), and a control module (6). The sterilization module (4) receives an airstream (AR), and generates sterilizing gas particles (GA1, GA2) via electrical breakdown of the airstream (AR). The venturi tube (5) includes a liquid conduit (51) for a liquid (L) to flow therethrough, and a gas conduit (52) intersecting the liquid conduit (51) at a connecting junction (510) and connecting the sterilization module (4) to receive the sterilizing gas particles (GA1, GA2). After the liquid flowing through the liquid conduit (51) passes through the connecting junction (510) a negative pressure is generated, and the sterilizing gas particles (GA1, GA2) is incorporated into the liquid (L) to produce a target liquid (GL). The control module (6) is connected to the sterilization module (4) and controls the sterilization module (4) to cause electrical breakdown.

## Description

The disclosure relates to a gas-liquid mixing device, and more particularly to a gas-liquid mixing device that produces a liquid containing sterilizing gas particles.

Because bacteria may grow in still water, many water dispenser systems employ ozone to inhibit bacterial growth by mixing ozone with water before dispensing the mixture of water and ozone. However, ozone is an unstable gas molecule; when the ozone in the mixture contacts air, the ozone molecules will breakdown within a very short time period which limits the amount of time the mixture can maintain its sterilizing capability.

Therefore, an object of the disclosure is to provide a gas-liquid mixing device that can alleviate at least one of the drawbacks of the prior art.

According to the disclosure, there is provided a gas-liquid mixing device according to claim 1.

Other features and advantages of the disclosure will become apparent in the following detailed description of the embodiment(s) with reference to the accompanying drawings. It is noted that various features may not be drawn to scale.
Figure 1 is a schematic side view illustrating a first embodiment of a gas-liquid mixing device according to the present disclosure.
Figure 2 is a block diagram illustrating an electrical circuit of the first embodiment.
Figure 3 is a fragmentary schematic side view illustrating the first embodiment.
Figure 4 is a schematic cross-sectional view illustrating a reactive oxygen species generator of a sterilization module of the first embodiment.
Figure 5 is a schematic cross-sectional view illustrating a reactive nitrogen species generator of the sterilization module of the first embodiment.
Figure 6 is a voltage over time plot of the reactive oxygen species generator or the reactive nitrogen species generator.
Figure 7 is a schematic cross-sectional view of a venturi tube of the first embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

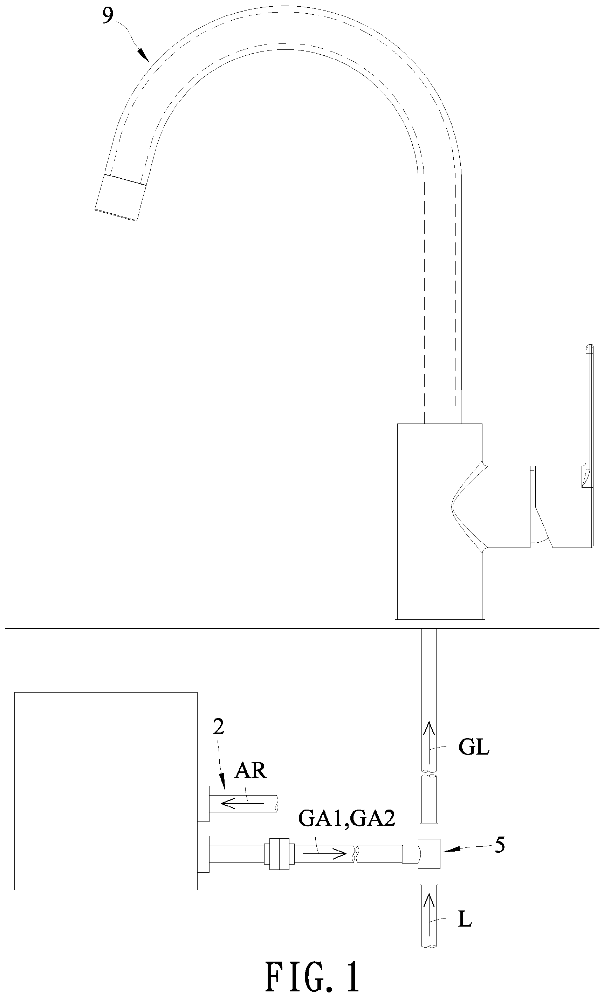

Referring to Figures 1 to 3, a first embodiment of the gas-liquid mixing device according to the present disclosure includes a gas inlet pipe 2, a detection module 3, a sterilization module 4, a venturi tube 5, a control module 6, an alternating current input module 7, two temperature sensing module 8, and an outlet tap 9.

The gas inlet pipe 2 is connected to the sterilization module 4 and used for an airstream (AR) to run through. The venturi tube 5 includes a liquid conduit 51 and a gas conduit 52.

The detection module 3 is connected to the gas inlet pipe 2, and is adapted to detect existence of the airstream (AR) in the gas inlet pipe 2. When the detection module 3 detects the airstream (AR) in the gas inlet pipe, the detection module 3 sends a work signal. In this embodiment, the detection module 3 is a sound detection sensor that may be activated by the sound of the airstream (AR) passing through the gas inlet pipe 2; however, this is not a limitation of the disclosure. In other embodiments, the detection module 3 may be implemented by other types of devices and may detect the airstream (AR) via other physical properties.

The sterilization module 4 is connected to the gas inlet pipe 2 to be downstream of the detection module 3. The sterilization module 4 is adapted for receiving the airstream (AR) and capable of generating a plurality of sterilizing gas particles (GA) via electrical breakdown of the airstream (AR).

The sterilization module 4 includes a reactive oxygen species generator 41 and a reactive nitrogen species generator 42. It should be noted that in other embodiments, the sterilization module 4 may include only one of the reactive oxygen species generator 41 and the reactive nitrogen species generator 42.

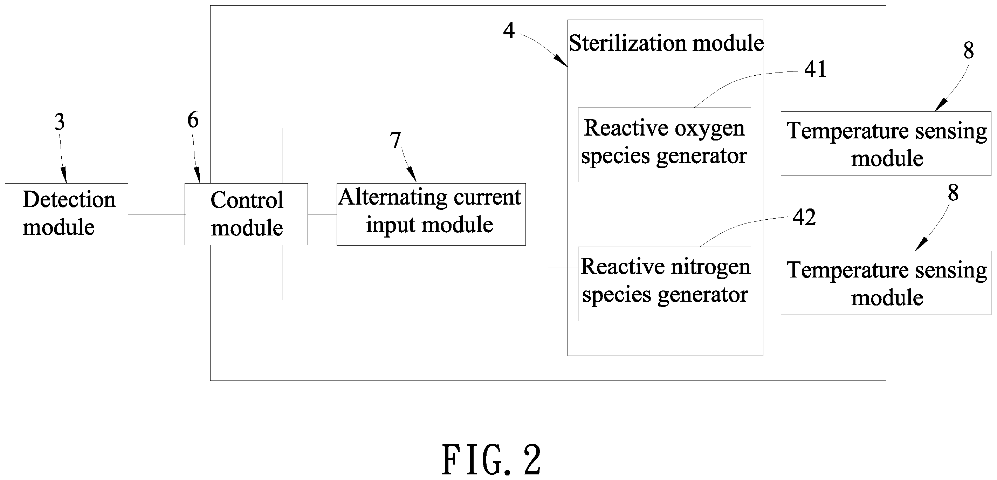

Referring to Figures 2, 3 and 4, the reactive oxygen species generator 41 is capable of generating first sterilizing gas particles (GA1) via electrical breakdown of the airstream (AR). The first sterilizing gas particles (GA1) generated by the reactive oxygen species generator 41 belong to a reactive oxygen species (ROS) such as ozone.

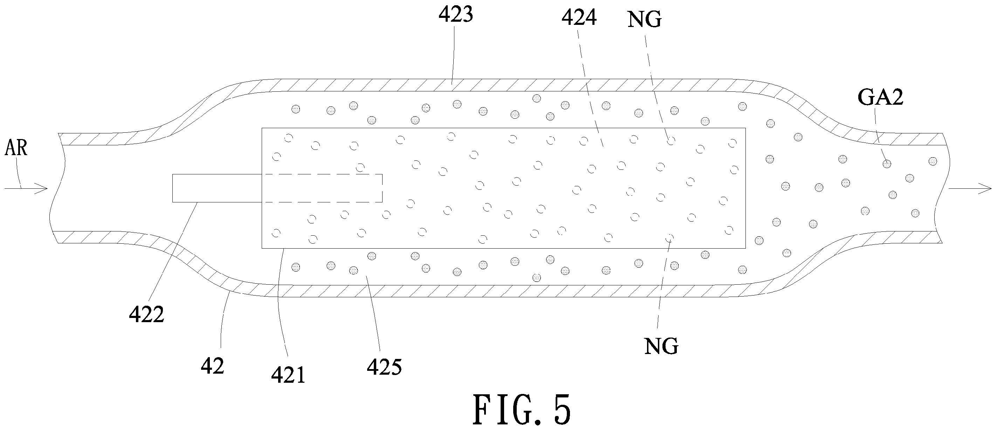

Referring to Figures 2, 3 and 5, the second reactive nitrogen species generator 42 is capable of generating second sterilizing gas particles (GA2) via electrical breakdown of the airstream (AR). The second sterilizing gas particles (GA2) generated by the reactive nitrogen species generator 42 belong to a reactive nitrogen species (RNS) such as nitrogen dioxide.

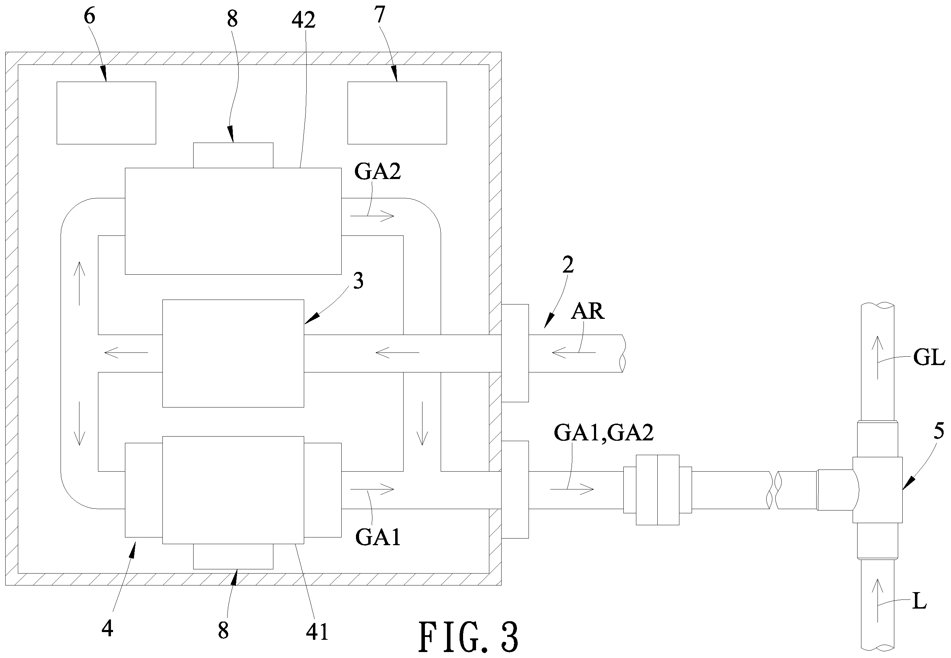

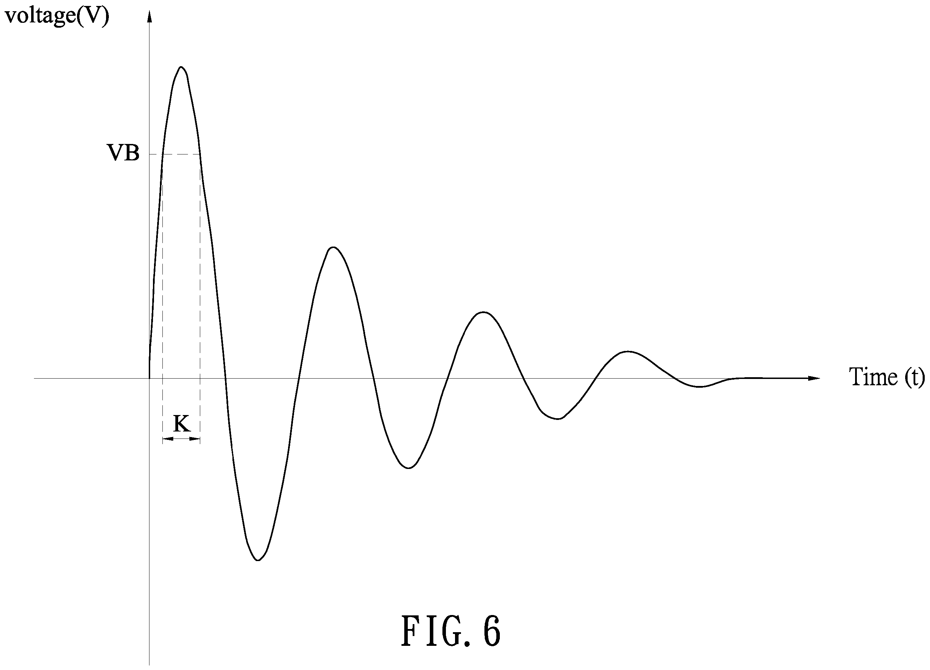

Referring to Figures 3, 4 and 6, the reactive oxygen species generator 41 has a tubular dielectric casing 411, a low-potential metallic sleeve 412, and a high-potential metallic body 413. The low-potential metallic sleeve 412 covers an outer surface of the dielectric casing 411. The high-potential metallic body 413 is inserted into the tubular dielectric casing 411. In this embodiment, the tubular dielectric casing 411 is made of a glass material and has a tubular structure, the low-potential metallic sleeve 412 is a metallic tube, and the high-potential metallic body 413 is a container made of metal.

The high-potential metallic body 413 has a central portion 414, an inlet portion 415, and an outlet portion 416. The central portion 414 is within the tubular dielectric casing 411. The inlet portion 415 is located downstream of the detection module 3 on one side of the central portion 414, and the outlet portion 416 is on another side of the central portion 414 that is opposite to the inlet portion 415. The tubular dielectric casing 411 and the central portion 414 cooperatively defines a reactive oxygen species generating cannel 417.

The inlet portion 415 is adapted for inletting the airstream (AR) to the reactive oxygen species generating channel 417. When the airstream (AR) in the reactive oxygen species generating channel 417 passes through the central portion 414, the tubular dielectric casing 411 and the low potential metallic sleeve 412, the airstream (AR) undergoes electrical breakdown to generate the first sterilizing gas particles (GA1), and the outlet portion 416 outlets the first sterilizing gas particles (GA1) to the gas conduit 52 of the venturi tube 5. It is noted that electrical breakdown of an airstream (AR) by using a dielectric component and electrodes at high voltage is a well known technique widely applied in the art, and is not the most salient feature of the present disclosure. Therefore, further details relating to the electrical breakdown of the airstream (AR) are omitted herein.

When the reactive oxygen species generator 41 is in operation, a controlled voltage applied between the high-potential metallic body 413 and the low-potential metallic sleeve 412 will increase until it surges higher than a breakdown voltage (VB), at which electrical breakdown of the airstream (AR) occurs. When this happens, oxygen molecules in the airstream (AR) are converted into reactive oxygen species particles (the first sterilizing gas particles GA1). After reaching electrical breakdown, the voltage will decrease and become lower than the (VB) in a gradually diminishing waveform until it increases again from an energy accumulation level to undergo electrical breakdown again.

Referring to Figures 3, 5 and 6, the reactive nitrogen species generator 42 has a dielectric container 421, a high-potential metallic member 422, and a low-potential metallic sleeve 423. The dielectric container 421 has a sealed space 424 adapted to contain an inert gas (NG). The high-potential metallic member 422 is inserted into the dielectric container 421. The low-potential metallic sleeve 423 surrounds the dielectric container 421 and is located downstream of the detection module 3. The dielectric container 421 and the low-potential metallic sleeve 423 cooperatively defines a reactive nitrogen species generating channel 425. In this embodiment, the dielectric container 421 is made of a glass material and has a tubular shape, and the high-potential metallic member 422 is a metallic rod. The high-potential metallic member 422 has a portion that is inserted into the sealed space 424, and another portion that is outside the sealed space 424.

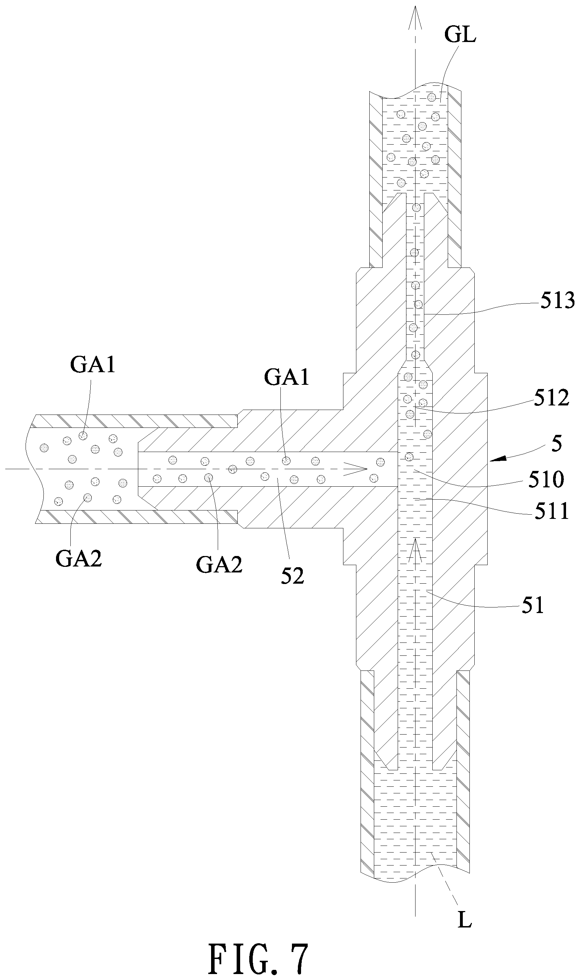

The nitrogen species generating channel 425 is fluidly communicated with the venturi tube 5 and adapted for receiving the airstream (AR). When the airstream (AR) in the reactive nitrogen species generating channel 425 passes through the high-potential metallic member 422, the dielectric container 421, and the low-potential metallic sleeve 423, the airstream (AR) undergoes electrical breakdown to generate reactive nitrogen species particles (the second sterilizing gas particles GA2) which is outletted to the gas conduit 52 (see Fig. 7) of the venturi tube 5. It is noted that electrical breakdown of an airstream (AR) between electrodes at high voltage is a well known technique in the art, and is not the most salient feature of the present disclosure. Therefore, further details relating to the electrical breakdown of the airstream (AR) are omitted herein.

When the reactive nitrogen species generator 42 is in operation, a controlled voltage between the another portion of the high-potential metallic member 422 outside the sealed space 424 and the low-potential metallic sleeve 423 will increase until it surges higher than a breakdown voltage (VB), at which electrical breakdown of the airstream (AR) occurs. When this happens, the breakdown airstream (AR) is converted into reactive nitrogen species particles (the second sterilizing gas particles GA2). After reaching electrical breakdown, the voltage between the high-potential metallic body 413 and the low-potential metallic sleeve 412 will decrease and become lower than the (VB) in a gradually diminishing waveform until it increases again from an energy accumulation level to undergo electrical breakdown again. When the high-potential metallic member 422 is charged and the temperature thereof is increased; the portion of the high-potential metallic member 422 that is inserted into the sealed space 424 may be shielded by the inert gas (NG) to prevent heat from transferring outward.

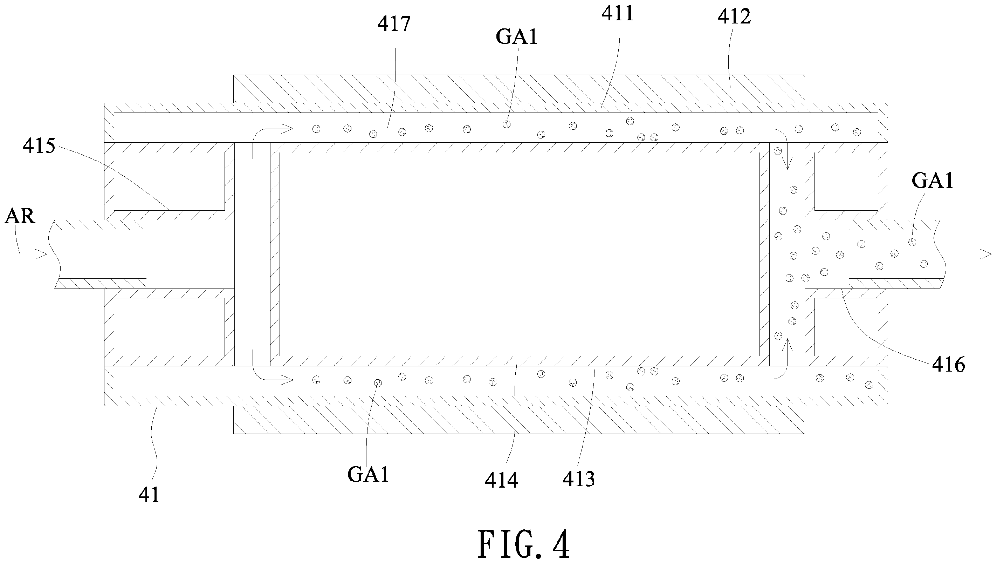

Referring to Figures 4, 5 and 7, the liquid conduit 51 of the venturi tube 5 is adapted for a liquid (L) to flow therethrough. The gas conduit 52 intersects and fluidly communicates the liquid conduit 51 at a connecting junction 510 and connects the sterilization module 4 to receive the sterilizing gas particles (GA) (i.e., the first sterilizing gas particles (GA1) and/or the second sterilizing gas particles (GA2)) generated from the sterilization module 4. More specifically, in this embodiment, the gas conduit 52 receives the first sterilizing gas particles (GA1) from the outlet portion 416 of the high-potential metallic body 413 of the reactive oxygen species generator 41, and the second sterilizing gas particles (GA2) from the nitrogen species generating channel 425 of the reactive nitrogen species generator 42. It is noted that the first sterilizing gas particles (GA1) from the oxygen species generator 41 and the second sterilizing gas particles (GA2) from the nitrogen species generator 42 may be mixed to form reactive oxygen nitrogen species (RONS) particles.

After the liquid (L) flowing through the liquid conduit 51 passes through the connecting junction 510, a negative pressure is generated in the liquid conduit 51, and the first and second sterilizing gas particles (GA1, GA2) (e.g., mixed to form RONS particles in this case) in the gas conduit 52 is incorporated into the liquid (L) to produce a target liquid (GL). More specifically, referring to Figure 7, the liquid tube 51 has an upstream section 511 upstream of the connecting junction 510, a downstream section 512 downstream of the connecting junction 510, and a venturi throat 513 formed in the downstream section 512 to generate the negative pressure.

Referring to Figures 2, 3 and 6, the detection module 3 is electrically connected to the control module 6, and the control module 6 is electrically connected to the sterilization module 4 to cause electrical breakdown of the airstream (AR). The detection module 3 detects the existence of the airstream (AR) flowing in the gas inlet pipe 2 and send a work signal to activate the control module 6. As soon as receiving the work signal, the control module 6 first controls one of the reactive oxygen species generator 41 and the reactive nitrogen species generator 42 of the sterilization module 4 to begin to perform a periodic electrical breakdown process for electrical breakdown of the airstream (AR). The control module 6 then controls another one of the oxygen species generator 41 and the nitrogen species generator 42 to begin to perform a periodic electrical breakdown process for electrical breakdown of the airstream (AR). In this embodiment, the control module 6 is a microprocessor; however, this is not a limitation of the present disclosure.

In more detail, after the previous one of the reactive oxygen species generator 41 and the reactive nitrogen species generator 42 performs the periodic electrical breakdown process for an initial peak period (K) over which an initial surge remains elevated above a breakdown voltage (VB), the control module 6 subsequently produces a control voltage to control the another one of the reactive oxygen species generator 41 and the reactive nitrogen species generator 42 to begin to perform the periodic electrical breakdown process. The initial peak period (K) is the first peak period of the periodic electrical breakdown process, and lasts from a time where the voltage of the periodic electrical breakdown process first rises to become higher than the breakdown voltage (VB) until it falls to become lower than the breakdown voltage (VB). Because the breakdown processes of the reactive oxygen species generator 41 and the reactive nitrogen species generator 42 are controlled to begin at different times, signal noises resulting from voltage variations of the reactive oxygen species generator 41 and the reactive nitrogen species generator 42, and the associated electro magnetic induction thus generated will not cause interferences, thereby ensuring the smooth functioning of electrical circuits in the gas-liquid mixing device. In other words, the generation of the first sterilizing gas particles (GA1) by the reactive oxygen species generator 41 and the generation of the second sterilizing gas particles (GA2) by the reactive nitrogen species generator 42 will be steady and maintained at a constant rate, thereby making the gas-liquid mixing device more efficient.

In an example, the control module 6 first produces a control voltage to control the reactive nitrogen species generator 42 to begin to perform the periodic electrical breakdown process. The initial peak period (K) of the periodic electrical breakdown process of the reactive nitrogen species generator 42 is 1000 ms in this example. Afterwards, the control module 6 produces another control voltage to control the reactive oxygen species 41 to perform the periodic electrical breakdown process. That is to say, in the first 1000 ms, the reactive nitrogen species generator 42 is operating alone, and after 1000 ms, the reactive nitrogen species generator 42 and the reactive oxygen species generator 41 are both operating.

The alternating current input module 7 is electrically connected to the control module 6, the reactive oxygen species generator 41, and the reactive nitrogen species generator 42. The alternating current input module 7 supplies each of the reactive oxygen species generator 41 and the reactive nitrogen species generator 42 with a variable frequency alternating current that has a frequency ranging from 10 KHz to 30 KHz.

The two temperature sensing modules 8 are both electrically connected to the control module 6, and are respectively connected to the reactive oxygen species generator 41 and the reactive nitrogen species generator 42 to respectively generate two temperature readings. When one of the temperature readings is rising, the control module 6 controls the alternating current input module 7 to increase the frequency of the variable frequency alternating current. When one of the temperature readings becomes lowered the control module 6 controls the alternating current input module 7 to decrease the frequency of the variable frequency alternating current.

It should be noted that temperature change is inversely correlated to the electrical load of an electrical circuit. Therefore, as the temperature of the reactive oxygen species generator 41 and the reactive nitrogen species generator 42 are raised, the efficiency of generating the first and second sterilizing gas particles (GA1, GA2) will decrease. Furthermore, the electrical load in the electrical circuit is also inversely correlated to the frequency of the variable frequency alternating current. If the temperature is raised, the frequency of the variable frequency alternating current may be raised in tandem. On the other hand, when the temperature is lowered, the frequency of the variable frequency alternating current may be lowered in order to stabilize the electric load and maintain the efficiency of first and second sterilizing gas particle (GA1, GA2) generation.

It should be noted that in other embodiments, the temperature sensing modules 8 may be omitted. In this case, the control module 6 may be programmed to control the alternating current input module 7 to increase or decrease the frequency of the variable frequency alternating current after a set operation time period has been reached (e.g., 5 seconds). In other words, the temperature change of the reactive oxygen species generator 41 and the reactive nitrogen species generator 42 are estimated based on the operating time period which is then used to adjust the frequency of the variable frequency alternating current.

Referring to Figures 1, 3 and 7, the outlet tap 9 is connected to the venturi tube 5 and used to deliver the target liquid (GL). More specifically, when the outlet tap 9 is opened, the target liquid (GL) with the incorporated first and second sterilizing gas particles (GA1, GA2) will be outputted and made available to a user.

An example of the operation of the gas mixing device may be summarized in the following. When the gas-liquid mixing device is operated, the outlet tap 9 is opened, the liquid (L) flowing through the liquid conduit 51 passes through the connecting junction 510 and a negative pressure is generated in the liquid conduit 51. When the airstream (AR) enters the gas inlet pipe 2, the detection module 3 will detect the existence of the airstream (AR) and activate the control module 6 to control the reactive nitrogen species generator 42 to begin to perform the periodic electrical breakdown process for the electrical breakdown of the airstream (AR) which generates the first sterilizing gas particles (GA1) that is outletted to the gas conduit 52. After a beginning surge period (K) of the periodic electrical breakdown process of the reactive nitrogen species generator 42, the control module 6 controls the reactive oxygen species generator 41 to perform the periodic electrical breakdown process for the electrical breakdown of the airstream (AR) which generates the second sterilizing gas particles (GA1) that is outletted to the gas conduit 52. The negative pressure in the liquid conduit 51 will cause the first and second sterilizing gas particles (GA1, GA2) to be incorporated into the liquid (L) to produce the target liquid (GL) which may be outputted for the user.

By virtue of the superior sterilizing effect of the first sterilizing gas particles (GA1) belonging to an ROS, and the superior duration of sterilization offered by the second sterilizing gas particles (GA2) belonging to an RNS, the target liquid (GL) that contains both the ROS particles and the RNS particles may have both better sterilizing effect and longer sterilizing duration.

It should be noted that the reactive oxygen species generator 41 and the reactive nitrogen species generator 42 of the present disclosure has superior sterilizing efficiency compared to that of conventional ozone generators or conventional nitrogen dioxide generators. However, this is not a limitation of the disclosure. In practical terms the reactive nitrogen species generator 42 and the reactive oxygen species generator 41 may be implemented by currently available ozone generators and/or nitrogen dioxide generators. In some embodiments, the sterilization module 4 may include only one of the reactive oxygen species generator 41 and the reactive nitrogen species generator 42.

In summary of the above, in the gas-liquid mixing device according to the present disclosure, by virtue of the sterilization module 4 that is capable of generating the sterilizing gas particles (GA1, GA2) via electrical breakdown of the airstream (AR), and by virtue of the sterilizing gas particles (GA1, GA2) being incorporated into the liquid (L) to produce the target liquid (GL), the target liquid (GL) has an efficient sterilizing effect, thereby achieving the object of the disclosure.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A gas-liquid mixing device **characterized by**:
a sterilization module (4) adapted for receiving an airstream (AR), and capable of generating a plurality of sterilizing gas particles (GA1, GA2) via electrical breakdown of the airstream (AR);
a venturi tube (5) including a liquid conduit (51) that is adapted for a liquid (L) to flow therethrough, and a gas conduit (52) that intersects and fluidly communicates said liquid conduit (51) at a connecting junction (510) and that connects said sterilization module (4) to receive said sterilizing gas particles (GA1, GA2) generated from said sterilization module (4), wherein after the liquid (L) flowing through said liquid conduit (51) passes through said connecting junction (510), a negative pressure is generated in said liquid conduit (51), and said sterilizing gas particles (GA1, GA2) in said gas conduit (52) is incorporated into the liquid (L) to produce a target liquid (GL); and
a control module (6) electrically connected to said sterilization module (4) and controlling said sterilization module (4) to cause electrical breakdown of the airstream (AR).

2. The gas-liquid mixing device as claimed in claim 1, wherein:
said sterilization module (4) includes one of a reactive oxygen species generator (41) and a reactive nitrogen species generator (42);
said reactive oxygen species generator (41) is capable of generating said sterilizing gas particles (GA) via electrical breakdown of the airstream (AR), said sterilizing gas particles (GA) generated by said reactive oxygen species generator belonging to a reactive oxygen species (ROS); and
said reactive nitrogen species generator (42) is capable of generating said sterilizing gas particles (GA) via electrical breakdown of the airstream (AR), said sterilizing gas particles (GA) generated by said reactive nitrogen species generator (42) belonging to a reactive nitrogen species (RNS).

3. The gas-liquid mixing device as claimed in claim 1, wherein:
said sterilization module (4) includes a reactive oxygen species generator (41) and a reactive nitrogen species generator (42);
said sterilizing gas particles includes first sterilizing gas particles (GA1) and second sterilizing gas particles (GA2);
said reactive oxygen species generator (41) is capable of generating said first sterilizing gas particles (GA1) via electrical breakdown of the airstream (AR), said first sterilizing gas particles (GA1) generated by said reactive oxygen species generator (41) belonging to a reactive oxygen species (ROS) ;
said reactive nitrogen species generator (42) is capable of generating said second sterilizing gas particles (GA2) via electrical breakdown of the airstream (AR), said second sterilizing gas particles (GA2) generated by said reactive nitrogen species generator (42) belonging to a reactive nitrogen species (RNS); and
after said control module (6) controls one of said reactive oxygen species generator (41) and said reactive nitrogen species generator (42) to begin to perform a periodic electrical breakdown process for electrical breakdown of the airstream (AR), said control module (6) subsequently controls another one of said oxygen species generator (41) and said nitrogen species generator (42) to begin to perform a periodic electrical breakdown process for electrical breakdown of the airstream (AR).

4. The gas-liquid mixing device as claimed in claim 3, wherein:
after said one of said reactive oxygen species generator (41) and said reactive nitrogen species generator (42) performs the periodic electrical breakdown process for an initial peak period (K) over which a beginning surge remains elevated above a breakdown voltage (VB), said control module (6) subsequently produces a control voltage to control said another one of said reactive oxygen species generator (41) and said reactive nitrogen species generator (42) to begin to perform the periodic electrical breakdown process.

5. The gas-liquid mixing device as claimed in any one of claims 3 and 4, wherein:
said gas-liquid mixing device further comprises a gas inlet pipe (2) connected to said sterilization module (4), and a detection module (3) connected to said gas inlet pipe (2) and electrically connected to said control module (6);
said detection module (3) is adapted to detect existence of the airstream (AR) in said gas inlet pipe (2) and sends a work signal to activate said control module (6) to control one of said reactive oxygen species generator (41) and said reactive nitrogen species generator (42) to begin to periodically perform the electrical breakdown process.

6. The gas-liquid mixing device as claimed in any one of claims 3 to 5, wherein:
said gas-liquid mixing device further comprises an alternating current input module (7) electrically connected to said control module (6), said reactive oxygen species generator (41), and said reactive nitrogen species generator (42);
said alternating current input module (7) supplies each of said reactive oxygen species generator (41) and said reactive nitrogen species generator (42) with a variable frequency alternating current that has a frequency ranging from 10 KHz to 30 KHz.

7. The gas-liquid mixing device as claimed in claim 6, wherein:
said gas-liquid mixing device further comprises two temperature sensing modules (8) which both are electrically connected to said control module (6), and which are respectively connected to said reactive oxygen species generator (41) and said reactive nitrogen species generator (42) to respectively generate two temperature readings;
when one of said temperature readings is rising, said control module (6) controls said alternating current input module (7) to increase the frequency of the variable frequency alternating current; and
when one of said temperature readings becomes lowered, said control module (6) controls said alternating current input module (7) to decrease the frequency of the variable frequency alternating current.

8. The gas-liquid mixing device as claimed in any one of claims 3 to 7, wherein:
said reactive oxygen species generator (41) has
a tubular dielectric casing (411),
a low-potential metallic sleeve (412) that covers an outer surface of said dielectric casing (411), and
a high-potential metallic body (413) that is inserted into said tubular dielectric casing (411), that has a central portion (414) that is within said tubular dielectric casing (411), an inlet portion (415) that is on one side of said central portion (414), and an outlet portion (416) that is on another side of said central portion (414) that is opposite to said inlet portion (415);
said tubular dielectric casing (411) and said central portion (414) cooperatively defines a reactive oxygen species generating channel (417);
said inlet portion (415) is adapted for inletting the airstream (AR) to said reactive oxygen species generating channel (417);
when the airstream (AR) in the reactive oxygen species generating channel (417) passes through said central portion (414), said tubular dielectric casing (411) and said low-potential metallic sleeve (412), the airstream (AR) undergoes electrical breakdown to generate said first sterilizing gas particles (GA1), and said outlet portion (416) outlets said first sterilizing gas particles (GA1) to said gas conduit (52) of said venturi tube (5).

9. The gas-liquid mixing device as claimed in any one of claims 3 to 8, wherein:
said reactive nitrogen species generator (42) has
a dielectric container (421) that has a sealed space (424) adapted to contain an inert gas (NG),
a high-potential metallic member (422) that is inserted into said dielectric container (421), and
a low-potential metallic sleeve (423) that surrounds said dielectric container (421);
said dielectric container (421) and said low-potential metallic sleeve (423) cooperatively defines a reactive nitrogen species generating channel (425) that is adapted for receiving the airstream (AR); and
when the airstream (AR) in the reactive nitrogen species generating channel (425) passes through said high-potential metallic member (422), said dielectric container (421) and said low-potential metallic sleeve (423), the airstream (AR) undergoes electrical breakdown to generate said second sterilizing gas particles (GA2) which is outletted to said gas conduit (52) of said venturi tube (5).

10. The gas-liquid mixing device as claimed in any one of claims 1 to 9, further comprising an outlet tap (9) connected to said venturi tube (5) and used to deliver said target liquid (GL).

11. The gas-liquid mixing device as claimed in any one of claims 1 to 10, wherein said liquid tube (51) has an upstream section (511) upstream of said connecting junction (510), a downstream section (512) downstream of said connecting junction (510), and a venturi throat (513) formed in said downstream section (512) to generate the negative pressure.
